# EUROPÄISCHE PATENTANMELDUNG

(11) **EP 0 527 410 A2**
(43) Veröffentlichungstag der Anmeldung: **17.02.1993**
(21) Anmeldenummer: 92113159.5
(22) Anmeldetag: 01.08.1992
(51) Int. Cl.: C08G 18/50, C08G 18/67, C08F 283/00

(54) **Zähmodifizierte Vinylesterurethanharze**

(30) Priorität: 14.08.1991 DE 4126826
(71) Anmelder: BASF Aktiengesellschaft, D-67063 Ludwigshafen (DE)
(72) Erfinder: Cramer, Edwin, Dr., W-6700 Ludwigshafen (DE); Hesse, Anton, Dr., W-6940 Weinheim (DE); Roland, Peter, Dr., W-6704 Mutterstadt (DE); Schuermann, Helmut, Dr., W-6701 Maxdorf (DE)

(57) **Zusammenfassung**

Die Erfindung betrifft zähmodifizierte Vinylesterurethanharze auf Basis eines Reaktionsproduktes aus einem polyfunktionellen Isocyanat, einem mehrwertigen Amin, gegebenenfalls einem Hydroxyalkyl(meth)acrylat, gelöst in einem Monomeren, vorzugsweise Styrol. Die Harze enthalten einen Zusatz von 2 bis 30 Gew.% Polyvinylacetat, Polyvinylalkohol, Polystyrol oder Polymethylmethacrylat. Zusammen mit Verstärkungsfasern und gegebenenfalls Füllstoffen können sie zur Herstellung von Hochleistungsverbundwerkstoffen verwendet werden.

## Beschreibung

Vinylesterurethanharze sind Lösungen von Vinylesterurethanen in flüssigen Comonomeren. Vinylesterurethane enthalten Urethan- und (Meth)Acrylatgruppen im Polymermolekül: 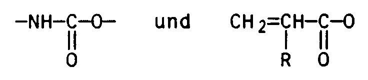
(mit R = H oder CH₃)
In DE-A 37 44 390 sind spezielle Vinylesterurethane beschrieben, die zusätzlich Harnstoffgruppen enthalten:

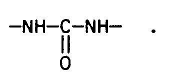

Sie werden hergestellt durch Umsetzung von
- A: einem polyfunktionellen Isocyanat mit
- B₁: einem mehrwertigen Amin, gegebenenfalls in Mischung mit
- B₂: einem mehrwertigen Alkohol, und
- C: einem Hydroxyalkyl(meth-)acrylat,
und Vermischen mit einem ungesättigten Monomeren.

Formkörper, die durch Härten derartiger Harze hergestellt werden, zeichnen sich durch gute Zähigkeit und Festigkeit, hohen Modul und hohe Wärmeformbeständigkeit aus. Für Hochleistungsverbundwerkstoffe, die dynamisch stark belastet werden müssen, reichen jedoch in vielen Fällen die Bruchzähigkeiten nicht aus.

Nun ist es bekannt, daß die Zähigkeit der Werkstoffe erhöht werden kann, wenn man die Länge der Polyamin- bzw. Polyol-Kette vergrößert. Dabei sinken dann aber Festigkeit, Steifigkeit und Wärmeformbeständigkeit stark ab.

Der Erfindung lag also die Aufgabe zugrunde, Vinylesterurethanharze bereitzustellen, die bei hoher Steifigkeit, Festigkeit und Wärmeformbeständigkeit eine stark verbesserte Bruchzähigkeit aufweisen.

Diese Aufgabe wird erfindungsgemäß gelöst durch den Zusatz von 5 bis 30 Gew.-Teilen eines thermoplastischen Polymeren zu 100 Gew.-Teilen des Vinylesterurethanharzes nach DE-A 37 44 390.

In EP-A 64 809 sind Vinylesterurethanharze, gelöst in monomerem Methylmethacrylat, beschrieben, die aber keine Harnstoffgruppen im Polymermolekül enthalten. Zur Verringerung des Schrumpfens beim Härten können ihnen thermoplastische Polymere zugemischt werden. Eine Verbesserung der Zähigkeit gehärteter Formteile ist nicht offenbart.

Zu den Ausgangsmaterialien ist folgendes zu sagen:

### A. Isocyanate

Zur Herstellung der Vinylesterurethanharze im Sinne der Erfindung kommen alle bekannten aliphatischen, cycloaliphatischen und aromatischen Polyisocyanate mit mindestens 2 Isocyanatgruppen pro Molekül in Frage. Beispielhaft für geeignete Isocyanate seien genannt: 4,4-Diphenylmethandiisocyanat (MDI), Hexamethylendiisocyanat, (HDI), Trimethylhexyldiisocyanat (TMDI), Cyclohexyldiisocyanat, Dicyclopentadiendimethylen-diisocyanat, Diisocyanato-diphenylether, Diisocyanatonaphthalin, Diphenylmethan-diisocyanat und Diisocyanato-toluol mit ihren Isomerengemischen, Isophorondiisocyanat (IPDI), Dicyclohexyl-diisocyanat, Polyphenylenpolymethylen-polyisocyanate (Roh-MDI);
Triisocyanato-cyclohexan, Triisocyanato-toluol, Triisocyanato-naphthalin, Triisocyanatobiphenyl, Triisocyanato-trimethylbenzol, Triisocyanato-diphenylmethan, Triisocyanato-methyldiphenylmethan, Triisocyanato-triphenylmethan, Triisocyanato-diphenylether, Tetraisocyanato-diphenylsulfid; urethangruppenhaltige, präpolymere Polyisocyanate wie z.B. das Reaktionsprodukt aus Trimethylolpropan und Diisocyanatetoluol;
trimerisierte, Isocyanuratgruppen enthaltende Polyisocyanate z.B. auf Basis HDI, Diphenylmethan-disocyanat und Isophorondiisocyanat;
präpolymere Polyisocyanate, die dargestellt werden durch Reaktion von Polyisocyanaten mit einem Unterschuß an Polyepoxiden in Gegenwart geeigneter Katalysatoren;
Polyisocyanate, die durch Vorreaktion eines Teils der NCO-Gruppen Carbodiimid- und Urethonimineinheiten enthalten;
sowie Präpolymere, die neben NCO-Gruppen Urethdioneinheiten enthalten.

Bevorzugte Isocyanate sind 4,4'-Diphenylmethandiisocyanat sowie das Isomerengemisch aus 2,2'- und 4,4'-Diphenylmethandiisocyanat.

### B₁ Mehrwertige Amine

Als Polyamine können sowohl aliphatische wie auch aromatische Amine eingesetzt werden. Beispielhaft seien genannt: Ethylendiamin, Diethylentriamin, Bis-(4-aminocyclohexyl)-methan, Diaminodiphenylmethan, Diaminodiphenylsulfon. Besonders geeignete Amine sind langkettige Amine mit Molekulargewichten von 150 bis 5000. Dazu zählen Etherdiamine wie 4,7-Dioxadecan-1, 10-diamin oder Verbindungen der allgemeinen Formel

H₂N-(C₃H₆O)ₘ-C₃H₆-NH₂,

wobei m Zahlen von 2 bis 80 bedeutet, oder Verbindungen der allgemeinen Formel

H₂N-C₃H₆-O-[(CH₂)₄O]ₙ-C₃H₆-NH₂,

wobei n Zahlen von 5 bis 80 bedeutet; weiterhin die Aminobenzoesäureester und Anthranilsäureester von Diolen wie z.B. Ethylenglykol, Propylenglykol, Polyethylenglykol, Polypropylenglykol, Polybutadienglykol, Polycaprolactonglykol oder Polytetramethylenetherglykol. Die besonders bevorzugten Aminobenzoesäureester von Polytetramethylenetherglykol haben folgende Struktur: 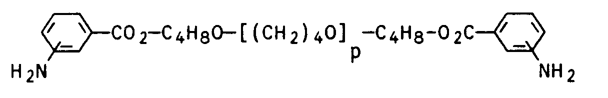
wobei p Zahlen von 5 bis 80 bedeutet.

### B₂ Mehrwertige Alkohole

Geeignete mehrwertige Alkohole sind: aliphatische Diole, wie Ethandiol-1,2, Propandiol-1,2, Butandiol-1,4, Dipropylenglykol, Neopentylglykol, Trimethylolpropan, Pentaerythrit; alicyclische Diole, wie hydriertes Bisphenol A, Cyclohexandiol, Cyclohexandimethanol und Tricyclohexandimethanol; Phenole wie Bisphenol A oder Resorcin; alkoxylierte Derivate von Bisphenolen wie z.B. Bisphenol A, Bisphenol S oder Bisphenol F; aliphatische oder aromatische Polyetherole mit Molekulargewichten bis 5000, z.B. Polyethylenglykol oder Polypropylenglykol; sowie Polyesterole, wobei sowohl gesättigte als auch ungesättigte hydroxyterminierte Polyester in Frage kommen. Grundsätzlich können auch Aminole, wie Ethanolamin, Propanolamin, Diethanolamin, Triethanolamin und Aminophenole mit den Isocyanaten umgesetzt werden. Bevorzugt ist Dipropylenglykol, gegebenenfalls im Gemisch mit Polypropylenglykol.

### Hydroxyalkyl-(meth-)acrylate

Zum Aufbau der endständigen Doppelbindungen im Vinylesterurethan werden Hydroxyalkyl-(meth-)acrylate mit den aus A, B₁ und B₂ hergestellten, Isocyanatgruppen enthaltenden Verbindungen umgesetzt. Hydroxyalkyl-(meth-)-acrylate werden durch folgende allgemeine Formel beschrieben: 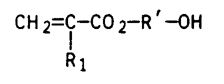
wobei R₁ = H oder CH₃
und R' eine Alkylengruppe bedeuten. Hydroxyalkyl(meth-)acrylate werden durch Umsetzung von (Meth-)Acrylsäure mit Alkylenoxiden wie Ethylen- oder Propylenoxid hergestellt. Geeignete Hydroxyalkyl-(meth-)acrylate im Sinne der Erfindung sind ferner Glycerindi-(meth-)acrylate, Trimethylolpropandi (meth-)acrylate und Pentaerythrittri-(meth-)acrylate. Bevorzugt sind Hydroxypropyl(meth-)acrylat und Hydroxyethyl(meth-)acrylat.

### C Monomere

Geeignet sind Vinylverbindungen, wie Styrol, α-Methylstyrol, alkylierte Styrole, Divinylbenzol, Vinylacetat und Vinylpyridin; niedermolekulare Maleinimide; Allylverbindungen, wie Diallylphthalat und Triallylcyanurat; Acryl- und Methacrylverbindungen, wie Acrylnitril, (Meth)acrylamid, Methyl(meth)acrylat, Ethyl(meth)acrylat, Propyl(meth)acrylat, Butyl(meth)acrylat, Ethylhexyl(meth)acrylat, Neopentylglykol(meth)acrylat, Ethylenglykoldi(meth)acrylat, Propylenglykoldi(methacrylat), Butandioldi(meth)acrylat, Glycerin-(meth)-acrylate, Hydroxyalkyl(meth)acrylate, alkoxilierte Bisphenol A-di (meth)acrylate sowie Glycidylmethacrylat und niedermolekulare Maleinimide. Sie werden in Mengen von 15 bis 75 Gew.%, bezogen auf A+B+C+D, eingesetzt. Bevorzugtes Monomeres ist Styrol.

Zur Herstellung der Vinylesterurethanharze sind verschiedene Verfahren möglich. Einmal kann zunächst das Isocyanat A mit dem Hydroxyalkyl-(meth)-acrylat C im Molverhältnis von etwa 1:0,5 bis 1:3 vorreagiert und anschließend mit dem mehrwertigen Amin B1 und gegebenenfalls dem mehrwertigen Alkohol B2 umgesetzt werden. In einem zweiten Verfahren werden die Komponenten A, B1 und ggf. B2 im Verhältnis A: (B1+B2) von 100:1 bis 100:90 vermischt und bei 40 bis 110°C umgesetzt. Anschließend wird die zur Absättigung der freien Isocyanatgruppen notwendige Menge den Hydroxyalkyl(meth)acrylat C zugefügt. Eine weitere Möglichkeit besteht darin, die Komponenten A, B1, B2 und C gemeinsam in einer Eintopfreaktion zum Vinylesterurethanharz umzusetzen. Eventuell vorhandenes, überschüssiges Polyisocyanat reagiert dabei mit dem Hydroxyalkyl(meth)acrylat zu einem verhältnismäßig niedermolekularen Vinylesterurethan, was zur Einstellung der Viskosität des Harzes ausgenutzt werden kann. Man erhält ein Gemisch präpolymerer Vinylesterurethane mit unterschiedlicher Kettenlänge und Molekulargewicht.

Die genannten Umsetzungen können in Substanz oder in den genannten Monomeren als Lösungsmittel durchgeführt werden. Zur Beschleunigung der Umsetzungen der Isocyanate mit den Alkohol- und Aminoverbindungen können geeignete Katalysatoren, wie sie aus der Polyurethanchemie bekannt sind, eingesetzt werden. Dazu zählen beispielsweise tertiäre Amine wie 1,2-Dimethylimidazol, Diazabicyclooctan, Diazabicyclononan, Triethylendiamin, Metallsalze wie Bleioctoat, Zinnoctoat oder Dibutylzinndilaurat sowie Mischungen von tertiären Aminen und Metallsalzen. Die Katalysatoren werden üblicherweise in Mengen von 0,05 bis 2 Gew.-%, bezogen auf A+B+C, zugegeben. Eine vorzeitige Gelierung der Reaktionsmischung kann durch Zusatz üblicher Inhibitoren wie z.B. Phenothiazin, Hydrochinon, Dimethylhydrochinon, Triphenylphosphit, tert.-Butyl-hydrochinon, Hydrochinonmonomethylether, tert.-Butylbrenzkatechin und p-Benzochinon verhindert werden. Die Inhibitoren werden in Mengen von 0,01 bis 2 Gew.-%, bezogen auf A+B+C, zugesetzt.

Die erfindungsgemäßen Vinylesterurethanharze enthalten als zähmodifizierenden Zusatz 2 bis 30, vorzugsweise 4 bis 20 und insbesondere 6 bis 10 Gew.% Polyvinylacetat, Polyvinylalkohol, Polystyrol oder Polymethylmethacrylat. Das Molekulargewicht Mw dieser Vinylpolymeren ist vorzugsweise kleiner als 150.000, insbesondere kleiner als 100.000; ihr Erweichungspunkt liegt zwischen 30 und 100°C. Diese Vinylpolymeren können als Lösung im Monomeren D dem Vinylesterurethanharz zugesetzt werden. Sie sind mit diesem mischbar.

Darüberhinaus können die Vinylesterurethanharze bis zu 20 %, bezogen auf ihr Gewicht, andere thermoplastische Kunststoffe oder härtbare Harze enthalten.

Bei der bevorzugten Anwendung als Hochleistungsverbundwerkstoffe werden den Vinylesterurethanharzen Verstärkungsfasern in Mengen von 25 bis 400 Gew.% und übliche Füllstoffe in Mengen von 0 bis 100 Gew.% zugesetzt.

Als Verstärkungsfasern kommen in Frage anorganische und organische Fasern in Form von Rovings, Matten und Geweben aus z.B. Glas, Kohlenstoff, Aramid oder Polyester. Zur Herstellung der Faserverbundwerkstoffe kommen die üblichen Verfahren in Betracht, wie z.B. Wickeln, Pultrusion, Injektion, Spritzen und Pressen.

Geeignete Füllstoffe sind z.B. übliche feinpulvrige oder körnige Füllstoffe wie Kreide, Kaolin, Quarzmehl, Dolomit, Schwerspat, Metallpulver, Aluminiumoxidhydrat, Zement, Talkum, Kieselgur, Holzmehl, Holzspäne, Pigmente und dergleichen.

Zur Aushärtung der Vinylesterurethanharze kommen die üblichen Polymerisationsinitiatoren, wie Peroxide und Azoverbidungen in Frage, die dem Harz in Mengen von 0,05 bis 5 Gew.%, vorzugsweise von 0,1 bis 2 Gew.%, bezogen auf A+B+C+D zugesetzt werden.

Als Radikale liefernde Initiatoren seien beispielhaft genannt: Benzoylperoxid, tert.-Butylperoctoat, tert.-Butylperbenzoat, Cyclohexanonperoxid, tert.-Butylperoxid und Hydroperoxide, ferner Azoverbindungen, wie Azodiisobutyronitril oder organische Verbindungen mit einer labilen Kohlenstoff-Kohlenstoff-Bindung.

Setzt man den peroxid-initiierten Formmassen übliche Polymerisationsbeschleuniger, wie z.B. Co-, Mn-, Sn- oder Ce-Salze organischer Säuren oder Amine, wie N,N-Dimethylanilin oder N,N-Diethylanilin zu, dann kann die Härtung auch ohne Temperaturerhöhung durchgeführt werden, wenn Hydroperoxide, bzw. Benzoylperoxide zum Einsatz kommen. Bei Verwendung üblicher Lichtinitiatoren, wie z.B. Benzoinether, Benzilketalen oder Acylphosphinverbindungen kann die Härtung durch Bestrahlen mit Licht der Wellenlänge 200 bis 50 nm durchgeführt werden.

Außer für Hochleistungsverbundwerkstoffe können die erfindungsgemäßen zähmodifizierten Vinylesterurethanharze auch zur Herstellung von Dübelmassen, Klebstoffen und Beschichtungen verwendet werden.

Die in den Beispielen genannten Teile und Prozente beziehen sich auf das Gewicht.

### Beispiel 1 (Vergleich)

1000 g (4 Mol) 4,4'-Diphenylmethandiisocyanat werden bei 50°C in 800 g Styrol gelöst. Man gibt 2 ml Dibutylzinndilaurat zu und versetzt das Reaktionsgemisch mit 65 g (0,1 Mol) Bis-(3-aminopropyl)-poly-tetrahydrofuran (Molmasse 650), welches in 400 g Styrol gelöst wird. Nach 10 Minuten werden bei 50°C 108 g (0,8 Mol) Dipropylenglykol zugefügt und 15 Minuten nachgerührt. Danach dosiert man 917 g Hydroxypropylmethacrylat (6,4 Mol) bei 50 bis 60°C zur Lösung und stabilisiert mit 600 mg Hydrochinon.

### Beispiel 2 (erfindungsgemäß)

Durch Auflösen von 400 g Polyvinylacetat (Mowilith CT 5, Fa. Hoechst) in 600 g Styrol erhält man eine 40 %ige klare Lösung des Thermoplasten in Styrol. 20 Teile dieser Lösung werden mit 80 Teilen des Vinylesterurethanharzes nach Beispiel 1 vermischt.

### Beispiel 3 (erfindungsgemäß)

Durch Auflösen von 400 g Polymethylmethacrylat (S-Polymerisat 410K6 der Fa. Resart) in 600 g Styrol erhält man eine 40 %ige klare Lösung des Thermoplasten in Styrol. 20 Teile dieser Lösung werden mit 80 Teilen des Vinylesterurethanharzes nach Beispiel 1 vermischt.

### Beispiel 4 (Vergleich)

Beispiel 1 wird wiederholt, wobei aber als Polyamin 684 g (0,34 Mol) Bis-(3-aminopropyl)-polytetrahydrofuran mit einer Molmasse von 2000 eingesetzt wurden.

Die in den Beispielen hergestellten Harze wurden mit 2 % Benzoylperoxid versetzt und 2 h bei 80°C und 4 h bei 160°C gehärtet.

Folgende Eigenschaften wurden gemessen:
- Glasübergangstemperatur T_{g}: [°C] nach DIN 53 445
- Elastizitätsmodul E-Modul: [MPa] nach DIN 53 457
- Biegefestigkeit F: [MPa] nach DIN 53 452
- Zähigkeit K1C: [MPa·m¹ 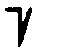 ²] nach ASTM E 399
- Zähigkeit G1C: [J·m⁻²]

| Ergebnisse | | | | |
|---|---|---|---|---|
| Harz nach | Beispiel 1 | Beispiel 2 | Beispiel 3 | Beispiel 4 |
| Tg | 165 | 155 | 152 | 135 |
| E-Modul | 3600 | 3550 | 3500 | 2600 |
| F | 150 | 155 | 130 | 100 |
| K1C | 0,7 | 1,13 | 1,02 | 1,13 |
| G1C | 130 | 330 | 280 | 380 |

## Patentansprüche

1. Zähmodifizierte Vinylesterurethanharze, enthaltend
I. 100 Gew.-Teile eines Reaktionsproduktes aus
A) einem polyfunktionellen Isocyanat,
B₁) einem mehrwertigen Amin, ggf. in Mischung mit
B₂) einem mehrwertigen Alkohol, und
C) einem Hydroxyalkyl(meth-)acrylat,
gelöst in 15 bis 75 Gew.%, bezogen auf A + B + C + D,
D) eines ungesättigten Monomeren,
wobei das Molverhältnis von Amin- und Alkoholkomponente B₁ + B₂ zur Isocyanatkomponente A 0,01:1 bis 0,9:1 beträgt, das Molverhältnis von Aminkomponente B₁ zu Alkoholkomponente B₂ von 1:20 bis 1:0 variieren kann, und das Hydroxyalkyl(meth-)acrylat C in mindestens äquivalentem Verhältnis zu den Isocyanatgruppen des Reaktionsproduktes aus A + (B₁ + B₂) eingesetzt wurde, und
II. 2 bis 30 Gew.-Teile Polyvinylacetat, Polyvinylalkohol, Polystyrol oder Polymethylmethacrylat.

2. Hochleistungsverbundwerkstoffe auf Basis der Vinylesterurethanharze nach Anspruch 1, zusätzlich enthaltend
III. 25 bis 400 Gew.-Teile Verstärkungsfasern und
IV. 0 bis 100 Gew.-Teile Füllstoffe.
